(19) Europäisches Patentamt

European Patent Office

Office européen des brevets

(11) Publication number: **0 588 318 B1**

## EUROPEAN PATENT SPECIFICATION

(45) Date of publication of patent specification: **06.12.95**    (51) Int. Cl.6: **C09D 5/08**, C08K 3/38

(21) Application number: **93114842.3**

(22) Date of filing: **15.09.93**

(54) **Cathodic protection against corrosion.**

(30) Priority: **17.09.92 JP 273612/92**

(43) Date of publication of application:
**23.03.94 Bulletin 94/12**

(45) Publication of the grant of the patent:
**06.12.95 Bulletin 95/49**

(84) Designated Contracting States:
**DE FR IT**

(56) References cited:
**WO-A-93/10045**
**DE-A- 1 769 894**
**US-A- 4 049 596**

**DATABASE WPI Derwent Publications Ltd.,**
**London, GB; AN 81-56057D & JP-A-56 072 045**
**(TOKYO SHIBAURA) 16 June 1981**

**DATABASE WPI Derwent Publications Ltd.,**
**London, GB; AN 78-46713A & JP-A-53 056 229**
**(DIANIPPON) 22 May 1978**

**DATABASE WPI Derwent Publications Ltd.,**
**London, GB; AN 80-91236C & JP-A-55 142 063**
**(DAINIPPON) 7 November 1980**

**DATABASE WPI Derwent Publications Ltd.,**

**London, GB; AN 81-56057D & JP-A-56 072 045**

**DATABASE WPI Derwent Publications Ltd.,**
**London, GB; AN 78-46713A & JP-A-53 056 229**

(73) Proprietor: **NIPPON PAINT CO., LTD.**
**1-2, Oyodokita 2-chome**
**Kita-ku**
**Osaka-shi**
**Osaka 572 (JP)**

(72) Inventor: **Kaga, Makoto**
**10-27-201, Horie 1-chome**
**Urayasu-shi,**
**Chiba (JP)**

(74) Representative: **Hansen, Bernd, Dr.**
**Dipl.-Chem. et al**
**Hoffmann, Eitle & Partner,**
**Patentanwälte,**
**Arabellastrasse 4**
**D-81925 München (DE)**

EP 0 588 318 B1

**Description**

BACKGROUND OF THE INVENTION

1. Field of the Invention

The present invention relates to a method of cathode protection for a steel material comprising applying an anticorrosive coating composition which is effective for preventing cathodic disbonding of coatings when it is coated onto a steel structure to which a cathodic protection is applied.

2. Description of the Related Art

One means for preventing corrosion of steel materials, in humid conditions, containing electrolytes such as brine and salt solution is a cathodic protection. A cathodic protection is a method which prevents dissolution of steel by maintaining a steel material as a cathode and inhibiting ionization of iron. However, when the iron portion has a large area, consumption of power and a sacrificial anode increases. Therefore, the steel material is not generally used directly for a cathodic protection, but in most cases, a cathodic protection is effected in combination with an anticorrosion means using an organic coating such as coating and lining. According to this composite anti-corrosion method, the major proportions of the steel material are protected from corrosion by the organic coating, and defecting portions occurring in this organic coating such as scratches and pin-holes, are supplemented by a cathodic protection, and therefore, economical efficiency can be improved through the above-mentioned supplementary function.

Generally speaking, metal ions are reduced and become insoluble on the metal surface polarized to the cathode. Therefore, a satisfactory effect can be obtained by effecting anticorrosion by applying power in correspondence with the metal ions which are to be dissolved. The amount of the metal ions to be dissolved is proportional to the surface area of the metal, and corresponds to the surface area of the defective portions in the case of the coated steel material. However, it is extremely difficult to know the exact surface area of the defective portions. For this reason, a cathodic protection is generally applied in excess. However, excessive polarization generates hydroxyl ions due to hydrolysis of water at the cathode, so that scratched portions of the organic coating function as a cathode and are always exposed to an alkaline atmosphere. When such a condition occurs, degradation of the organic coating and cut-off of adhesion points occur on any of the interfaces between the steel material and the organic coating and between the organic coatings, particularly at the portions at which alkali resistance is weak, and cathodic disbonding of the organic coating occurs.

As means for restricting such cathodic disbonding, a method of carrying out a chromate treatment or applying a zinc-rich primer coating of a specific thermosetting epoxide resin has been proposed (see Japanese Unexamined Patent Publication (Kokai) No. 59-222275). However, this technique is not sufficient to satisfy the high-level requirement for the cathodic disbonding resistance in recent years, and does not employ a zinc borate-based pigment component in the composition. Japanese Unexamined Patent Publication (Kokai) No. 55-142063 discloses a composition consisting of a polyvinyl butyral resin, a liquid epoxide resin, a borate compound, an epoxy-silane coupling agent and phosphoric acid as a pre-treatment composition for baking type. However, this coating composition is directed to a wash primer for pre-treating a metal and is different from the object of the present invention, and the resins used in this reference do not use a curing agent and are thermoplastic resins.

SUMMARY OF THE INVENTION

Accordingly, the objects of the present invention are to eliminate the above-problems of the prior art and to provide a method of cathode protection for a steel material comprising applying an anticorrosive coating composition capable of effectively preventing cathodic disbonding of an anticorrosive coating during a cathodic protection.

In accordance with the present invention, there is provided a method characterized in that:

(a) subjecting the steel surface to a mechanical treatment,

(b) applying, to the treated steel surface, by an anticorrosive coating composition comprising the following components (1) and (2):

(1) 100 parts by weight, in terms of solid, of a thermosetting resin; and

(2) 5 to 300 parts by weight, in terms of solid, of a zinc borate compound, characterized in that the ratio of the curing agent for the thermosetting resin to the base of the coating composition is (0.6 - 1.1)/1.0, in terms of an equivalent ratio of the reactive group of the curing agent and the functional group capable of reacting with the reactive group of the curing agent, and

(c) polarizing the coated steel material as cathode.

## DESCRIPTION OF THE PREFERRED EMBODIMENTS

The inventor of the present invention has conducted intensive studies in search of a mechanism for preventing cathodic disbonding of a coating during a cathodic protection and effective ingredients therefor, and has discovered that a method comprising the application of a composition consisting of a zinc borate compound and a thermosetting resin exhibits an excellent prevention function as a coating resistance against cathodic disbonding.

Any thermosetting resins can be used as the thermosetting resin to be used in the present invention so long as they can firmly adhere to a steel material or to a steel material subjected to a mechanical treatment such as blast cleaning or to a steel material subjected to a chemical treatment such as a chromate treatment or treatment with zinc phosphate. Examples of such resins include an epoxy resin with an epoxy resin curing agent, a polyol resin with isocyanates, an acryl modified epoxy resin with a polymerization initiator, an alkyd resin, a humidity curing urethane resin, and so forth.

Examples of the epoxy resin suitable for the present invention are diglycydil ethers of 4,4-(bishydroxyphenyl) alkanes prepared by reacting 4,4'-(bishydroxyphenyl) alkanes such as bisphenol A, bisphenol F, bisphenol AD, etc., with epihalohydrin. There is no problem in using glycyldyl ethers of 4,4-(bishydroxyphenyl) alkanes as the principal component in combination with a phenol novolac epoxy resin or cresol novolac epoxy resin. Various formulations can be employed for the coating such as a non-solvent type, a solvent type, a powder type, etc., in accordance with the kind of these 4,4-(bishydroxyphenyl) alkanes, and are optionally selected and used in accordance with an applicability of coating. By the way, the epoxy resins of this kind are commercially available on the market as "Epikote" (a product of Yuka Shell Epoxy K.K.), "Epotohto" (a product of Tohto Kasei K.K.), "Araldite" (a product of Ciba-Geigy), "Epiclon" (a product of Dainippon Ink & Chemicals, Inc.), "Dow Epoxy" (a product of Dow Chemical International, Ltd.), and so forth.

Conventional epoxy curing agents containing a plurality of addition-polymerizable functional groups to the epoxy group of an epoxy resin in the molecules thereof can be used as the epoxy curing agent. Examples of the epoxy curing agents of this kind include diamines such as aliphatic diamines, aromatic diamine and heterocyclic diamines, various modified products of these diamines, polyamide resins obtained by the reaction with aliphatic acids and their dimers, acid anhydrides, thiols, phenols, and so forth. These curing agents are commercially available on the market as "Epomate" (a product of Yuka Shell Epoxy K.K.; various heterocyclic diamine modified products), "Summide" (a product of Sanwa Chemical Industry Co., Ltd.; various amine adducts or polyamides), "Tohmide" (a product of Fuji Kasei-Kogyo K.K.; various polyamides), "Epicure" (a product of Yuka Shell Epoxy K.K.; various amine adducts, thiols, phenols), "Rikashide" (a product of New Japan Chemical Co., Ltd.; acid anhydrides), and so forth. Instead of being the addition polymerization type, the curing agents may be dicyandiamide having addition reactivity and self-polyaddition catalytic activity between epoxy groups, the derivatives thereof, and imidazoles. These epoxy resin curing agents are appropriately selected and used in accordance with the types of the coating, the curing conditions (ordinary temperature curing, heat curing, etc.), and so forth.

The curing system of the polyol resin and the isocyanates forms urethane bonds by reacting the hydroxyl groups of the polyol resin with the isocyanate groups, and forms coating films. Examples of the polyol resin are polyol resins obtained by conventional preparation methods, such as polyester polyols, acrylic polyols, polyether polyols, etc., and these polyol resins are used either alone or in mixture of two or more polyols. The curing components of these polyol resins are commercially available on the market as polyol diisocyanate adducts prepared by adding an equimolar diisocyanate to the number of hydroxyl groups of polyhydric alcohol compound and diisocyanate polymers obtained through self-polyaddition by reacting water with diisocyanates.

The acryl modified epoxy resin is formed by introducing a polymerizable double bond into the epoxy group of the epoxy resin by the addition reaction of acrylic acid, and the epoxy resins having various grades are commercially available. These acryl modified epoxy resins can be polymerized by radical polymerization, and can be cured by the use of a catalyst such as an organic peroxide, a photopolymerization initiator, etc., as the polymerization initiator.

The alkyd resin can be obtained by dehydration polycondensation or addition polymerization of polyhydric alcohols, polyvalent carboxylic acid or their anhydrides by aliphatic acids. Examples of the polyhydric alcohols as the starting material of the alkyd resin includes dihydric alcohols such as ethylene glycol, propylene glycol, 1,3-butylene glycol, 1,6-hexane diol, diethylene glycol, dipropylene glycol, neopentyl glycol, triethylene glycol, hydrogenated bis-phenol A, bis-phenol dihydroxypropyl ether, etc.; trihydric alcohols such as glycerin, trimethylolpropane, tris-hydroxymethyl aminomethane, etc.; and tetrahydric alcohols such as pentaerythrit, dipentaerythrit, etc. Examples of polyvalent carboxylic acids include dibasic acids such as phthalic anhydride, isophthalic acid, terephthalic acid, succinic anhydride, adipic acid, azelaic acid, sebacic acid, tetrahydrophthalic anhydride, hexahydrophthalic anhydride, tetrabromophthalic anhydride, tetrachlorophthalic anhydride, endomethylene tetrahydrophthalic anhydride, maleic anhydride, fumaric anhydride, itaconic acid, etc.; tribasic acids such as trimellitic anhydride, methylcyclohexenetricarboxylic acid, etc.; and tetrabasic acids such as pyromellitic anhydride. Examples of the aliphatic acids are caprylic acid, capric acid, lauric acid, myristic acid, palmitic acid, stearic acid, oleic acid, ricinoleic acid, linolenic acid, eleostearic acid, and so forth.

In some cases, the alkyd resins synthesized from the polyhydric alcohols, the polybasic acids and the aliphatic acids described above are used, but in many cases, they are used after being subjected to various modification treatments. Examples of the modified resins include phenol-alkyd resins obtained by adding phenols to the alkyd resin and having improved chemical resistance and adhesion to the steel material, bisphenol type epoxy resins, epoxy-modified alkyd resins obtained by adding alicyclic or aliphatic epoxy compounds (the resin of this type are sometimes referred to as the "epoxypolyester resins") and vinylalkyd resins obtained by adding styrene, vinyltoluene, acrylic acid esters or methacrylic acid esters. Curing of these various kinds of alkyd resins can be made by a melamine resin or a urea resin. They can be cured by oxidation in air using organometallic salts such as an organic acid with lead, manganese, cobalt, etc. In the present invention, these alkyd resins can be selected optionally in order to satisfy performance other than the cathodic disbonding resistance, and the applicability of coating.

The term "humidity curing urethane resin" means those resins which are prepared by synthesizing a resin having an isocyanate group left at the terminal thereof by reacting an isocyanate in excess with a polyol resin and a polyhydric alcohol and reacting and curing the isocyanate groups between the resins by the moisture in air. Examples of the polyol resins used here include a polyether polyol resin, a polyester polyol resin, an acrylic polyol resin, etc., and examples of the isocyanate compounds include aromatic isocyanates such as tolylene isocyanate, 4,4'-diphenyl isocyanate, xylylene diisocyanate, isophorone diisocyanate, etc., hexamethylene diisocyanate, saudine diisocyanate, various isocyanates obtained by hydrogenating the aromatic isocyanates described above, and aliphatic isocyanates such as trimethylhexamethylene diisocyanate and dimer acid diisocyanates. In the present invention, the humidity curing urethane resin synthesized by arbitrarily selecting the polyol resin and various isocyanate compounds described above is used.

Further, the present invention can use a phenoxy resin. The phenoxy resin is an epoxy resin which is derived from bisphenol and has an extremely large molecular weight. The number average molecular weight thereof is at least 10,000 and the number of epoxy groups is extremely small. Examples of commercially available phenoxy resins are "DER684" (a product of Dow Chemical), "Epotohto YD050" and "Epotohto YD040" (products of Tohoto Kasei K.K.).

The ratio of the curing agent/the base of the coating solution is preferably (0.6-1.1)/1.0, more preferably (0.8-1.0)/1.0, in terms of the equivalent ratio of the reactive group of the curing agent and the functional groups capable of reacting with the reactive group of the curing agent.

The most suitable resins for the object of the present invention are the epoxy resin and the urethane resin, as the epoxy resin and the urethane resin have high water resistance and moreover, have high adhesion to the steel materials. Needless to say, the cathodic disbonding resistance can be obtained when other resins are used, too.

One kind of a zinc borate compound or a mixture of two or more kinds of zinc borate compounds such as zinc methaborate $[Zn(BO_2)_2]$, basic zinc borate $[ZnB_4O_7 \cdot 2ZnO]$ and zinc borate $[2ZnO \cdot 3B_2O_3 \cdot 3.5H_2O]$ can be used as the zinc borate compound constituting the anticorrosive coating composition of the present invention. Zinc borate is preferably used. Zinc borate can be obtained by melting a mixed starting material of zinc oxide and boric acid or double-decomposing the aqueous solution of the mixed starting material.

As to the blend proportion of the thermosetting resin and the zinc borate compound, the amount of the zinc borate compound is within the range of 5 to 300 parts by weight on the basis of 100 parts by weight of the thermosetting resin, preferably from 10 to 200 parts by weight and more preferably, from 10 to 100 parts by weight. When the amount of the zinc borate compound is less than 5 parts by weight, the restriction effect of cathodic disbonding does not appear, whereas when it exceeds 300 parts by weight, the coating film becomes so brittle that it cannot be used practically, though the restriction effect of cathodic disbonding can be obtained.

4

A cathodic protection property can be imparted by using calcium phosphate in combination with the zinc borate compound. Besides the components of the composition, that is, the thermosetting resin and the zinc borate compound, an organic solvent, a tinting pigment, a surface control agent, etc., can be added, whenever necessary. The coating composition according to the present invention is used at a solid concentration of 10 to 100%, such as a powder type, a non-solvent type, a solvent (e.g., an organic solvent or water) type etc.

The anticorrosive coating composition having the composition described above can be produced by the same method as the production methods of ordinary coating compositions. In the case of a liquid non-solvent coating composition, for example, a predetermined amount of the zinc borate compound is added to the thermosetting resin, and the mixture is subjected to dispersion treatment using a roll mill, a dissolver, etc. In the case of an organic solvent type coating composition, the mixture is subjected to dispersion treatment using a roll mill, a dissolver, an SG mill, a pot mill, etc. To prepare a powder coating composition, a predetermined amount of the zinc borate compound is added to the thermosetting resin, and the mixture is premixed, then heat-kneaded, cooled, and thereafter pulverized and classified.

The coating of the anticorrosive coating method according to the present invention is applied by the use of a brush, a roller, an airless spray, an air spray, a powder coating mechanism, etc., which is selected suitably in accordance with the form of the composition, in a customary manner. A heavy duty protective film such as polyethylene lining, heavy duty protective urethane coating composition, epoxy resin coating composition, etc., and/or a finishing layer such as a coloring layer may be applied to the surface of the coating film after it is coated.

Examples of the preferable formulation are as follows:

|  | Organic-solvent type | Water-base type | Non-solvent type | Powder type |
|---|---|---|---|---|
| (a) Vehicle | 25-95 | 25-95 | 25-95 | 25-95 |
| (b) Zinc borate | 5-75 | 5-75 | 5-75 | 5-75 |
| (c) Pigment (except (b)) | 0-70 | 0-70 | 0-70 | 0-70 |
| Total (a) + (b) + (c) | 100 | 100 | 100 | 100 |
| Organic solvent<br>water | 30-900<br>- | -<br>30-900 | -<br>- | -<br>- |
| Suitable resin | ● Epoxy | ● Epoxy | ● Epoxy | ● Epoxy |
|  | ● Urethane | ● Alkyd | ● Urethane<br>● Acryl modified epoxy |  |

The reason why the mechanism of anticorrosive coating composition according to the present invention exhibits excellent cathodic disbonding resistance has not yet been clarified sufficiently, but it is obvious that the zinc borate compound exhibits the effective restriction function for the diffusion on the interface between the steel material and the coating film in the strong aqueous alkaline solution in the cathodic atmosphere.

In other words, we believe that the cathodic disbonding phenomenon presumably occurs due to the following mechanism.

(1) Since the steel material around the defective portion functions as the cathode, the atmosphere becomes strongly alkaline.

(2) Water is diffused from the section of the defective portion to the interface between the steel material and the coating film or to the coating film itself.

(3) Hydroxyl ions are diffused with the diffusion of water.

(4) The adhesion point between the steel surface and the coating film is hydrolyzed by the hydroxyl ions, and is cut off.

Accordingly, in order to prevent cathodic disbonding, it is effective to restrict the diffusion of water and to neutralize alkali. The zinc borate compound as one of the components of the composition of the present invention has extremely low solubility in water. Therefore, the coating film containing this zinc borate compound has higher hydrophobicity and effectively functions to diffuse water. Moreover, the zinc borate compound has a pH buffer function to alkali, and this action neutralizes the hydroxyl ions diffused with the diffusion of water and sufficiently protects the adhesion point from hydrolysis.

Such actions collectively function and effectively prevent cathodic disbonding of the coating in a cathodic protection.

5

EXAMPLES

The present invention will now be further illustrated by, but is by no means limited to, the following Examples.

Examples 1 to 6 and Comparative Examples 1 to 3

A base of coating solution having the component composition listed in Table 1 was mixed with a curing agent. In Examples 1 to 6 and Comparative Examples 2 and 3, the coating components were mixed, dissolved and then subjected to dispersion treatment at 1,500 rpm for 20 minutes using a sand grind mill and thereafter filtrated by a wire net of 100 mesh. The curing agent was mixed in the amount shown and dissolved, and was then filtrated by a metal net of 400 mesh.

Each mixed solution of the base of coating solution and the curing agent was coated so as to form a film having a dry film thickness of 30 to 40 $\mu$m to a sandblasted steel material (SS-41) using an air spray, was then dried at room temperature for 3 days, and was baked at a temperature of 80°C for 30 minutes. Each testpiece, which was thus coated and had a width of 70 mm, a length of 150 mm and a thickness of 9 mm, was subjected to a cathodic protection test, a cross-cut tape test (1 mm-width) and an impact resistance test. Each testpiece having a width of 70 mm, a length of 150 mm and a thickness of 0.8 mm was subjected to a bending resistance test. The results of these measurements are shown in Table 1.

Each of the measurement methods was as follows.

(1) Cathodic protection test 1:

Two cuts (7 cm-length) reaching a substrate were cut into the coating film of each testpiece in such a manner as to cross each other (X-cut), and the side surfaces as well as the back were protectively coated with a tar epoxy resin coating according to JIS (Japanese Industrial Standard) K5664, 1st kind. One of the corners of the testpiece was polished with a file, and a cable was spot-welded to form an Zn sacrificial anode. While the cut portions and the sacrificial anode were dipped into table salt solution (3%), the testpiece was left standing at 20°C for 30 days, and thereafter picking up testpiece the cut portions of the testpiece were scraped out by a knife and the width of one side thus peeled was measured.

(2) Cathodic protection test 2:

The test was carried out at 60°C for 5 days in accordance with ASTM G8-90, and the peel width from around a hole due to the artificial defect was measured in the same way as in the cathodic protection test 1 described above.

(3) Cross-cut tape test (1 mm-width):

A residual ratio of cross-cut squares after peeling of a pressure sensitive adhesive cellophane tape was measured in accordance with JIS K5400 8.5.

(4) Bending resistance test:

The testpiece was bent to 180°C along a core body having a diameter of 10 mm in accordance with JIS K5400 8.1 and the condition of the coating at the bent portion was evaluated. Evaluation was made in accordance with the following standard:

⊚: no abnormality
o: fine cracks
X: cracks and peel occurred

(5) Impact resistance test:

A weight of 500g was dropped from a 50 cm height and the condition of the coating was evaluated in accordance with JIS K5400 8.3.2 (Dupont Method). Evaluation was made in accordance with the following standard:

⊚: no abnormality
o: fine cracks
X: peel occurred

6

Table 1

| No. | Base of coating solution composition | | | | | Curing agent composition | | | | Mixing ratio[4] | Cathodic protection test | | Cross-cut tape test[6] | Bending resistance test | Impact resistance test |
|---|---|---|---|---|---|---|---|---|---|---|---|---|---|---|---|
| | Epoxy resin[1] | Zinc borate | Toluene | MIBK[2] | Iso-butanol | Curing agent | Toluene | MIBK[2] | Iso-butanol | | test 1 (mm) | test 2 (mm) | | | |
| Example 1 | 100 | 7.3 | 50 | 10 | 25 | 100 | 25 | 5 | 10.3 | 47.0 | 9-10 | 5-6 | 100/100 | ● | ● |
| 2 | 100 | 14.5 | 50 | 10 | 25 | 100 | 25 | 5 | 10.3 | 45.6 | 7-8 | 4-5 | 100/100 | ● | ● |
| 3 | 100 | 100 | 50 | 10 | 25 | 100 | 25 | 5 | 10.3 | 32.0 | 4-5 | 2-3 | 100/100 | ● | ● |
| 4 | 100 | 145 | 50 | 10 | 25 | 100 | 25 | 5 | 10.3 | 27.6 | 4-5 | 2-3 | 100/100 | ● | ● |
| 5 | 100 | 290 | 50 | 10 | 25 | 100 | 25 | 5 | 10.3 | 19.1 | 3-4 | 2-3 | 100/100 | ○ | ● |
| 6 | 100 | 435 | 50 | 10 | 25 | 100 | 25 | 5 | 10.3 | 14.7 | 3-4 | 2-3 | 100/100 | ○ | ○ |
| Comp. Example 1 | 100 | - | 50 | 10 | 25 | 100 | 25 | 5 | 10.3 | 49.0 | 25-30 | 19-23 | 100/100 | ● | ● |
| 2 | 100 | 4.4 | 50 | 10 | 25 | 100 | 25 | 5 | 10.3 | 48.0 | 20-23 | 15-20 | 100/100 | ● | ● |
| 3 | 100 | 580 | 50 | 10 | 25 | 100 | 25 | 5 | 10.3 | 11.9 | 3-4 | 2-13 | *5) | × | × |

Remarks:
1) "Epikote 1001" (a product of Yuka Shell Epoxy K.K.; solid)
2) methyl isobutyl ketone (hereinafter the same)
3) polyamide type epoxy curing agent "Versamide 415" (a product of Henkel-Hakusi K.K.)
4) mixing ratio (parts by weight) of curing agent per 100 parts by weight of base of coating solution
5) cohesive failure along the cross-cut occurred
6) residual squares/cutting squares (100/100 ... peeling does not exist completely)

The following can be understood from Table 1. The testpieces of Examples 1 to 6 using the coating compositions each containing a predetermined amount of zinc borate ($2ZnO \cdot 3B_2O_5 \cdot 3.5H_2O$) blended with the epoxy resin exhibited excellent cathodic disbonding resistance and coating performance, but in Comparative Example 1 wherein zinc borate was not added and in Comparative Example 2 wherein the blend amount of zinc borate was below 5 parts by weight in terms of solid, peel was great in the cathodic

7

protection test. Further, in Comparative Example 3 wherein the blend amount of zinc borate exceeded 300 parts by weight in terms of solid, the properties in the cross-cut tape test, the bending resistance test and the impact resistance test were deteriorated, though the peel resistance was high.

Examples 7 to 13 and Comparative Example 4

A 30.9 parts by weight amount of the same curing agent as that of Example 1 was mixed with 100 parts by weight of each of base of the coating solutions having the compositions shown in Table 2, and each coating testpiece was produced in the same way as in Example 1.

Table 2

| Component/Ex. No. | Example | | | | | | | Comp. Example 4 |
|---|---|---|---|---|---|---|---|---|
| | 7 | 8 | 9 | 10 | 11 | 12 | 13 | |
| Epoxy resin[1] | 100 | 100 | 100 | 100 | 100 | 100 | 100 | 100 |
| Zinc borate | 110 | - | - | 55 | 55 | - | 50 | - |
| Basic zinc borate | - | 110 | - | 55 | - | 55 | 30 | - |
| Zinc methaborate | - | - | 110 | - | 55 | 55 | 30 | - |
| Barium borate | - | - | - | - | - | - | - | 110 |
| Toluene | 50 | 50 | 50 | 50 | 50 | 50 | 50 | 50 |
| MIBK | 10 | 10 | 10 | 10 | 10 | 10 | 10 | 10 |
| Isobutanol | 25 | 25 | 25 | 25 | 25 | 25 | 25 | 25 |

Remarks: 1) "Epikote 1001" (a product of Yuka Shell Epoxy K.K., solid)

The measurement tests were carried out for each testpiece in the same way as in Example 1, and the results are shown in Table 3.

Table 3

| Example No. | Cathodic protection test | | Cross-cut tape test | Bending resistance test | Impact resistance test |
|---|---|---|---|---|---|
| | test 1 (mm) | test 2 (mm) | | | |
| Example 7 | 4 - 5 | 2 - 3 | 100/100 | ◎ | ◎ |
| Example 8 | 6 - 7 | 2 - 3 | 100/100 | ◎ | ◎ |
| Example 9 | 6 - 7 | 2 - 3 | 100/100 | ◎ | ◎ |
| Example 10 | 4 - 5 | 2 - 3 | 100/100 | ◎ | ◎ |
| Example 11 | 4 - 5 | 2 - 3 | 100/100 | ◎ | ◎ |
| Example 12 | 6 - 7 | 2 - 3 | 100/100 | ◎ | ◎ |
| Example 13 | 4 - 5 | 2 - 3 | 100/100 | ◎ | ◎ |
| Comparative Example 4 | 23 - 28 | 18 - 24 | 100/100 | ◎ | ◎ |

It can be understood by comparing Table 2 with Table 3 that Examples 7 to 13, wherein basic zinc borate ($ZnB_4O_7 \cdot 2H_2O$) or/and zinc methaborate ($Zn(BO_2)_2$) were mixed with zinc borate ($2ZnO \cdot 3B_2O_5 \cdot 3.5H_2O$), exhibited excellent cathodic protection resistance, but the coating composition of Comparative Example 4 using barium borate exhibited a remarkably inferior cathodic protection resistance.

Example 14

A 100 parts by weight amount of zinc borate was blended with 100 parts by weight of an epoxy resin ("Epikote 807", a product of Yuka Shell Epoxy K.K., liquid) and was dispersed by a roll mill in one pass to prepare a base of liquid non-solvent type epoxy resin coating. Next, 23 parts by weight of a heterocyclic

8

type diamine-modified epoxy curing agent ("Epomate B002", a product of Yuka Shell Epoxy K.K.) was added to 100 parts by weight of this base of coating solution, and was stirred and mixed, and the resulting mixture solution was coated to a surface of a steel material (SS-41) by a bar coater #50 to a dry film thickness of 30 to 50 $\mu$m. The coating film was heat-cured at 200°C for 30 minutes to obtain a testpiece. The testpiece was subjected to the test measurement in the same way as in Example 1, and the results are shown in Table 4.

Comparative Example 5

A 46 parts by weight amount of the same curing agent as that of Example 14 was blended to 100 parts by weight of the base of same epoxy resin as that of Example 14, and was then stirred and mixed. In this cutting composition, zinc borate was not contained. Thereafter, the same procedures were carried out in the same way as in Example 14, and a testpiece was obtained. This testpiece was tested and measured in the same way, and the results are tabulated in Table 4.

Example 15

A 100 parts by weight amount of zinc borate, 8 parts by weight of dicyan amide ("Epicure DICY 15", a product of Yuka Shell Epoxy K.K.) and 1 part of 2-methyl-4-ethyl imidazole were added to 100 parts by weight of an epoxy resin ("Epikote 1004", a product of Yuka Shell Epoxy K.K., solid), and the mixture was mixed and pulverized by a mixer. Next, the mixture was dispersed and subjected to preliminary reaction. Three parts by weight of fine silicon dioxide powder ("Aerosile 300", a product of Nippon Aerosile Corporation) was added to 100 parts by weight of the reaction product and was pulverized to obtain a powder coating composition having a mean particle size of 38 $\mu$m. The same steel material as that of Example 1 was preheated to 180°C, and was then coated electrostatically with the powder coating composition having the composition described above. Thereafter, it was baked at 180°C for 30 minutes to obtain a testpiece having a 200 to 250 $\mu$m-thick coating. This testpiece was tested and measured in the same way as in Example 1, and the results are shown in Table 4.

Comparative Example 6

Exactly the same powder coating composition (mean particle size of 40 $\mu$m) as that of Example 15, except that zinc borate was not contained was prepared. The coating method was carried out in the same way as in Example 15 using this powder coating composition, and the resulting testpiece was tested and measured. The results are shown in Table 4.

Example 16

A 100 parts by weight amount of zinc borate was added to 100 parts by weight of a branched-chain polyetherpolyol ("Desmophen 900U", a product of Sumitomo-Bayer Urethane Co., Ltd.; OH 8.8%), 20 parts by weight of toluene, 20 parts by weight of ethyl acetate and 10 parts by weight of methyl ethyl ketone, and the mixture was dispersed using a sand grind mill. The dispersion was filtrated by a 100 mesh wire net to prepare a base of coating solution. A two-pack urethane coating was prepared (mixing ratio: 100 parts by weight of the base of coating solution) 24 parts by weight of an aromatic polyisocyanate ("Sumidur L", a product of Sumitomo-Bayer Urethane Co., Ltd.; NCO 13% as curing agent). A testpiece was produced using this coating composition in the same way as in Example 1 and was tested and measured. The results were shown in Table 4.

Comparative Example 7

A coating solution having the same composition as that of Example 16, except that zinc borate was not added, was prepared, and 40 parts by weight of the same curing agent as that of Example 16 was added to 100 parts by weight of this base of coating solution. Thereafter, a testpiece was obtained, and was tested and measured in the same way as in Example 16. The results are shown in Table 4.

Example 17

A 60 parts by weight amount of zinc borate, which was dried at 150°C for 3 hours and was then left for cooling inside a desiccator, was added to 100 parts by weight of a humidity curing type polyisocyanate ("Desmodur E1160", a product of Sumitomo-Bayer Urethane Co., Ltd.; NCO 5.5%) and the mixture was stirred for 20 minutes using a disperser to prepare a humidity curing type urethane resin coating composition. A testpiece was produced by carrying out the coating method in the same way as in Example 1, and was tested and measured. The results are shown in Table 4.

Comparative Example 8

A testpiece was produced in the same way as in Example 17 without adding zinc borate, and was tested and measured. The results are shown in Table 4.

Example 18

A 100 parts by weight amount of zinc borate, 10 parts of a styrene monomer, 0.3 parts by weight of 6% cobalt naphthenate and 0.02 parts by weight of paraffin (melting point: 50 to 52°C) were added to 100 parts by weight of an epoxy-modified acrylic resin ("Diclite UE5105L", a product of Dainippon Ink & Chemicals, Inc.), and the mixture was dispersed using a roll mill. An epoxy acrylate resin coating composition was prepared by adding 2 parts by weight of MEK peroxide to 100 parts by weight of this coating solution. Next, the coating composition was coated to a steel material surface using a bar coater #50 to a dry film thickness of 25 to 35 $\mu$m, was then dried at room temperature for 3 days and was further baked at 80°C for 30 minutes to obtain a testpiece. This testpiece was tested and measured. The results are shown in Table 4.

Comparative Example 9

An epoxy acrylate resin coating composition having the same composition as that of Example 18, except that zinc borate was not added, was prepared. A testpiece was obtained using this coating composition in the same method as in Example 18, and was tested and measured. The results are shown in Table 4.

Example 19

A 100 parts by weight amount of zinc borate and 20 parts by weight of cyclohexane were added to 100 parts by weight of a polyester resin ("Becolite 46-119S", a product of Dainippon Ink and Chemicals, Inc.), and the mixture was dispersed using a sand grind mill. After 15 parts by weight of a butylated melamine resin ("Uban 20R", a product of Mitsui Toatsu Chemicals, Inc.) was mixed, the mixture was filtrated by a 100 mesh wire net to prepare a melamine-polyester resin coating composition. This coating composition was coated by a bar coater #50 to a steel material surface to a dry film thickness of 30 to 35 $\mu$m and was baked at 180°C for 30 minutes. The testpiece was tested and measured. The results are shown in Table 4.

Comparative Example 10

A melamine-polyester resin coating composition having the same composition as that of Example 19, except that zinc borate was not added, was prepared, and a testpiece was obtained using this coating composition in the same way as in Example 19. The testpiece was tested and measured, and the results are shown in Table 4.

Example 20

A 30 parts by weight amount of toluene and 70 parts by weight of zinc borate were added to a long oil alkyd resin ("R708T", a product of Nippon Paint Co., Ltd), and the mixture was dispersed by a sand grind mill. After the mixture was filtrated, a 6% toluene solution of cobalt naphthenate and a 6% manganese naphthenate were added to the mixture, and the mixture was stirred and mixed to prepare an alkyd resin coating composition. A coated testpiece was produced using this coating composition in the same way as in Example 1, and was tested and measured. The results are shown in Table 4.

### Comparative Example 11

An alkyd resin coating composition having the same composition as that of Example 20, except that zinc borate was not added, was prepared, and a testpiece was produced using this coating composition and was tested and measured in the same way as in Example 20. The results are shown in Table 4.

### Comparative Example 12

A 100 parts by weight amount of a 45% by weight toluene solution of a chlorinated polyethylene resin ("Superclon 773H", a product of Nippon Paper Industries Co., Ltd.), 45 parts by weight of zinc borate and 5 parts by weight of toluene were mixed, and were then dispersed using a sand grind mill, and filtrated using a 100 mesh wire net to prepare a chlorinated polyethylene resin coating composition. A testpiece was produced using this coating composition, and was then tested and measured in the same way as in Example 1. The results are shown in Table 4.

### Comparative Example 13

A 30 parts by weight amount of a polyvinylbutyral resin ("Eslex BMS", a product of Sekisui Chemical Co., Ltd.) and 70 parts by weight of a phenol resin ("Bakelite PR207", a product of Sumitomo Bakelite Co., Ltd.) were dissolved in 100 parts by weight of isopropyl alcohol, and after 100 parts by weight of zinc borate was added to this solution, the mixed solution was dispersed by a sand grind mill and filtrated by a 100 mesh wire net to prepare a butyral resin coating composition. A testpiece was produced using this coating composition, and was tested and measured in the same way as in Example 1. The test results are shown in Table 4.

Table 4

| Example No. | Cathodic protection test | | Cross-cut tape test | Bending resistance test | Impact resistance test |
|---|---|---|---|---|---|
| | test 1 (mm) | test 2 (mm) | | | |
| Example 14 | 4 - 5 | 2 - 3 | 100/100 | ◎ | ◎ |
| Comp. Ex. 5 | 15 - 17 | 18 - 23 | 100/100 | ◎ | ◎ |
| Example 15 | 4 - 5 | 2 - 3 | 100/100 | ◎ | ◎ |
| Comp. Ex. 6 | 14 - 17 | 19 - 21 | 100/100 | ◎ | ◎ |
| Example 16 | 5 - 6 | 3 - 5 | 100/100 | ◎ | ◎ |
| Comp. Ex. 7 | 20 - 25 | 19 - 23 | 100/100 | ◎ | ◎ |
| Example 17 | 5 - 7 | 5 - 8 | 100/100 | ◎ | ◎ |
| Comp. Ex. 8 | 25 - 29 | full face peel | 100/100 | ◎ | ◎ |
| Example 18 | 5 - 6 | 6 - 8 | 100/100 | ◎ | ◎ |
| Comp. Ex. 9 | 30 - 34 | 23 - 27 | 100/100 | ◎ | ◎ |
| Example 19 | 6 - 7 | 7 - 9 | 100/100 | ◎ | ◎ |
| Comp. Ex. 10 | 26 - 29 | 25 - 30 | 100/100 | ◎ | ◎ |
| Example 20 | 7 - 8 | 9 - 11 | 100/100 | ◎ | ◎ |
| Comp. Ex. 11 | full area peel | full area peel | 100/100 | ◎ | ◎ |
| Comp. Ex. 12 | 19 - 23 | 22 - 25 | 100/100 | ◎ | ◎ |
| Comp. Ex. 13 | full area peel | full area peel | 100/100 | ◎ | ◎ |

Examples 14 to 20 used the coating compositions of the present invention wherein the kinds of the thermosetting resins were changed, and Comparative Examples 5 to 11 were corresponding examples wherein zinc borate was not added, respectively. Comparative Examples 12 and 13 represented the examples wherein the coating compositions containing zinc borate blended with the thermoplastic resin were used, respectively. It can be understood from the results of Table 4 that Examples of the present invention could obtain by far excellent cathodic disbonding resistance in comparison with Comparative Examples not containing zinc borate, though the degree of effects varied to some extent depending on the kind of the thermosetting resins used in the respective Examples. In Comparative Examples 12 and 13 using the thermoplastic resin as the binder, the anticorrosive effect was equivalent or inferior to that of Comparative Examples 5 to 11, although zinc borate was added, and they could not be put to practical application.

Example 21

The testpiece produced in Example 14 was quickly heated to a temperature of 180°C on a hot press, and a 300 $\mu$m-thick adhesive polyethylene film ("Admer NE060", a product of Mitsui Petrochemical Industries, Ltd.) was laminated on the former. Further, a low density polyethylene molded sheet (3 mm-thick) was placed on the laminate and was pressed by a roller. After the laminate was left standing in this condition for 30 seconds, it was cooled with water to obtain a testpiece of a polyethylene lining steel having a three-layered structure. This testpiece was subjected to the cathodic protection test and the adhesion test. In the adhesion test, a cut reaching the steel substrate with a 1 cm-width was formed in the coating layer by a cutter knife, and a value of tensile strength test at an angle of 180° was measured so as to evaluate before dipping or boiling test, after dipping in saline (60°C, 3%) and after dipping in boiling water (95 to 100°C). The results are shown in Table 5.

Comparative Example 14

A testpiece of the polyethylene lining steel having the three-layered structure was produced using the testpiece produced in Comparative Example 5 as the base in the same way as in Example 21. This testpiece was tested in the same way as in Example 21, and the results are shown in Table 5.

Example 22

A urethane elastomer coating composition ("Hipon 500", a product of Nippon Paint Co., Ltd.) was coated to the testpiece of Example 17 to a dry film thickness of 3 mm and was dried at a room temperature for one week to produce a testpiece of a heavy duty protective urethane coating composition. This testpiece was subjected to the cathodic protection test and the adhesion test. In the adhesion test, an aluminum jig having a diameter of 2 cm was bonded by an epoxy adhesive, and while a cut reaching the steel substrate was formed around the jig, the testpiece and the jig were pulled off, respectively, and a load at this time was measured. The results are shown in Table 5.

Comparative Example 15

A testpiece of a heavy duty protective urethane coating was produced using the testpiece of Comparative Example 8 as the base in the same way as in Example 22, and was tested and measured also in the same way as in Example 22. The results are shown in Table 5.

Example 23

An epoxy resin coating composition ("Hipon 30HB", a product of Nippon Paint Co., Ltd.) was coated to the testpiece of Example 3 to a dry film thickness of 100 $\mu$m, was left standing at room temperature for 3 days and was then baked at 80°C for 30 minutes to prepare a testpiece. The testpiece was tested and measured in the same way as in Example 22. The results are shown in Table 5.

Table 5

| Example No. | Cathodic protection test | | Measured values of adhesion test (kg/cm²) | | |
|---|---|---|---|---|---|
| | test 1 (mm) | test 2 (mm) | Before in dipping or boiling | After | |
| | | | | dipping saline | boiling water |
| Example 21 | 3 - 4 | 2 - 4 | at least 25[1] | at least 25[1] | at least 25[1] |
| Comp. Ex. 14 | 16 - 19 | 18 - 21 | at least 25[1] | 7 - 9 | 5 - 6 |
| Example 22 | 4 - 6 | 3 - 4 | 110 - 140 | 120 - 150 | 115 - 140 |
| Comp. Ex. 15 | 20 - 27 | full face peel | 110 - 140 | 115 - 135 | 120 - 140 |
| Example 23 | 5 - 6 | 4 - 5 | 50 | 43 | 53 |

1) polyethylene layer was broken

It can be understood from the results shown in Table 5 that, even when a lining or an organic coating was applied to the coating surface, the coating composition according to the present invention exhibits higher cathodic disbonding resistance and higher adhesion than Comparative Examples containing no zinc borate compound.

As described above, the anticorrosive composition used in the method according to the present invention is constituted by blending a predetermined amount of the zinc borate compound with the thermosetting resin, and this composition can drastically improve the cathodic disbonding resistance of the coating film. Accordingly, the present invention can effectively improve durability of steel materials directed to marine structures, buried structures (e.g., pipe line, underground tank etc.) or ships.

**Claims**

1. A method of cathode protection for a steel material, characterized in that:
   (a) subjecting the steel surface to a mechanical treatment,
   (b) applying, to the treated steel surface, by an anticorrosive coating composition comprising the following components (1) and (2):
      (1) 100 parts by weight, in terms of solid, of a thermosetting resin; and
      (2) 5 to 300 parts by weight, in terms of solid, of a zinc borate compound, characterized in that the ratio of the curing agent for the thermosetting resin to the base of the coating composition is (0.6 - 1.1)/1.0, in terms of an equivalent ratio of the reactive group of the curing agent and the functional group capable of reacting with the reactive group of the curing agent, and
   (c) polarizing the coated steel material as cathode.

2. A method of cathode protection as claimed in claim 1, wherein a heavy duty protective film and/or a finishing layer is further applied to the surface of the coated film.

3. A method of cathode protection as claimed in claim 1, wherein the thermosetting resin is at least one resin selected from (a) epoxy resins and epoxy curing agents, (b) polyol resins and isocyanates, (c) acryl modified epoxy resins and polymerization initiators, (d) alkyd resins, (e) humidity curing type urethane resins, and (f) phenoxy resins.

4. A method of cathode protection as claimed in claim 3, wherein the epoxy resin comprises, (a) glycidyl ether of 4,4-(bishydroxyphenyl) alkane or (b) glycidyl ether of 4,4-(bishydroxyphenyl) alkane as a main component, in combination with (i) phenol novolac epoxy resin or (ii) cresol novolac epoxy resin.

5. A method of cathode protection as claimed in claim 3, wherein the epoxy curing agent is at least one compound selected from the group consisting of aliphatic diamines, aromatic diamines, heterocyclic diamines and the modified products of the above-mentioned diamines, polyamide resins reacted with aliphatic acids or the dimers thereof, acid anhydrides, thiols, phenols, dicyandiamide derivatives having an addition reactivity and self-polyaddition catalytic activity, and imidazoles.

6. A method of cathode protection as claimed in claim 3, wherein the polyol is at least one resin selected from the group consisting of polyester polyol resins, acrylic polyol resins and polyether polyol resins.

7. A method of cathode protection as claimed in claim 3, wherein the isocyanate is at least one diisocyanate compound.

8. A method of cathode protection as claimed in claim 3, wherein the alkyd resins are those obtained by dehydrate condensation polymerization or addition polymerizaiton of polyhydric alcohols and polyhydric carboxylic acid or anhydrides with aliphatic acids.

9. A method of cathode protection as claimed in claim 8, wherein the alkyd resin is at least one resin selected from the group consisting of phenol[modified]alkyd resins, epoxy modified alkyd resins and vinyl alkyd resins.

10. A method of cathode protection as claimed in claim 1, wherein the zinc borate compound is at least one compound selected from the group consisting of zinc methaborate, basic zinc borate and zinc borate.

11. A method of cathode protection as claimed in claim 10, wherein the zinc borate compound is zinc borate.

12. A method of cathode protection as claimed in claim 1, wherein the weight ratio of the components (1)/-(2) is 100/10-200.

13. A method of cathode protection as claimed in claim 1, wherein the weight ratio of the components (1)/-(2) is 100/10-100.

14. A method of cathode protection as claimed in claim 1, wherein the composition further comprises calcium phosphate.

**Patentansprüche**

1. Verfahren zum katodischen Schutz eines Stahlmaterials, gekennzeichnet durch
   (a) Unterwerfung der Stahloberfläche einer mechanischen Behandlung,
   (b) Aufbringen auf die behandelte Stahloberfläche von einer antikorrosiven Beschichtungszusammensetzung, die die folgenden Komponenten (1) und (2) umfaßt:
   (1) 100 Gewichtsteile, als Feststoff ausgedrückt, eines wärmehärtbaren Harzes; und
   (2) 5 bis 300 Gewichtsteile, als Feststoff ausgedrückt, einer Zinkboratverbindung, dadurch gekennzeichnet, daß das Verhältnis des Härtungsmittels für das wärmehärtbare Harz zur Grundzusammensetzung der Beschichtungszusammensetzung (0,6 - 1,1)/1,0 beträgt, ausgedrückt als Äquivalentverhältnis der reaktionsfähigen Gruppe des Härtungsmittels und der funktionellen Gruppe, die zur Reaktion mit der reaktionsfähigen Gruppe des Härtungsmittels in der Lage ist, und
   (c) Polarisierung des beschichteten Stahlmaterials als Katode.

2. Verfahren zum katodischen Schutz nach Anspruch 1, worin ein hochbelastbarer Schutzfilm und/oder eine Deckschicht weiterhin auf die Oberfläche des aufgetragenen Filmes aufgebracht wird.

3. Verfahren zum katodischen Schutz nach Anspruch 1, worin das wärmehärtbare Harz wenigstens ein Harz ist, ausgewählt unter (a) Epoxidharzen und Epoxidvernetzungsmitteln, (b) Polyolharzen und Isocyanaten, (c) Acryl-modifizierten Epoxidharzen und Polymerisationsinitiatoren, (d) Alkydharzen, (e) Feuchtigkeits-härtenden Urethanharzen und (f) Phenoxyharzen.

14

4. Verfahren zum katodischen Schutz nach Anspruch 3, worin das Epoxidharz umfaßt (a) Glycidylether von 4,4-(Bishydroxyphenyl)alkan oder (b) Glycidylether von 4,4-(Bishydroxyphenyl)alkan als Hauptkomponente in Kombination mit (i) Phenol-Novolak-Epoxidharz oder (ii) Kresol-Novolak-Epoxidharz.

5. Verfahren zum katodischen Schutz nach Anspruch 3, worin das Epoxidhärtungsmittel wenigstens eine Verbindung ist, ausgewählt aus der Gruppe, die aus aliphatischen Diaminen, aromatischen Diaminen, heterocyclischen Diaminen und den modifizierten Produkten der oben genannten Diamine, Polyamidharzen umgesetzt mit aliphatischen Säuren oder den Dimeren davon, Säureanhydriden, Thiolen, Phenolen, Dicyandiamid-Derivaten mit einer Additionsreaktionsfähigkeit und katalytischer Selbst-Polyadditionsaktivität und Imidazolen besteht.

6. Verfahren zum katodischen Schutz nach Anspruch 3, worin das Polyol wenigstens ein Harz ist, ausgewählt aus der Gruppe, die aus Polyesterpolyolharzen, Acrylpolyolharzen und Polyetherpolyolharzen besteht.

7. Verfahren zum katodischen Schutz nach Anspruch 3, worin das Isocyanat wenigstens eine Diisocyanatverbindung ist.

8. Verfahren zum katodischen Schutz nach Anspruch 3, worin die Alkydharze solche sind, die durch dehydratisierende Kondensationspolymerisation oder Additionspolymerisation von mehrwertigen Alkoholen und mehrwertigen Carbonsäuren oder Anhydriden mit aliphatischen Säuren erhalten werden.

9. Verfahren zum katodischen Schutz nach Anspruch 8, worin das Alkydharz wenigstens ein Harz ist, das aus der Gruppe ausgewählt ist, die aus Phenol[modifizierten]-Alkydharzen, Epoxid-modifizierten-Alkydharzen und Vinylalkydharzen besteht.

10. Verfahren zum katodischen Schutz nach Anspruch 1, worin die Zinkboratverbindung wenigstens eine Verbindung ist, die aus der Gruppe ausgewählt ist, die aus Zinkmetaborat, basischem Zinkborat und Zinkborat besteht.

11. Verfahren zum katodischen Schutz nach Anspruch 10, worin die Zinkboratverbindung Zinkborat ist.

12. Verfahren zum katodischen Schutz nach Anspruch 1, worin das Gewichtsverhältnis der Komponenten (1)/(2) den Wert 100/10-200 hat.

13. Verfahren zum katodischen Schutz nach Anspruch 1, worin das Gewichtsverhältnis der Komponenten (1)/(2) den Wert 100/10-100 hat.

14. Verfahren zum katodischen Schutz nach Anspruch 1, worin die Zusammensetzung weiterhin Calciumphosphat enthält.

**Revendications**

1. Procédé de protection cathodique pour un matériau en acier caractérisé en ce que :
   (a) on soumet la surface en acier à un traitement mécanique,
   (b) on applique sur la surface en acier traitée une composition de revêtement anticorrosive comprenant les constituants suivants (1) et (2) :
   (1) 100 parties en poids, en termes de matière solide, d'une résine thermodurcissable ; et
   (2) 5 à 300 parties en poids, en termes de matière solide d'un composé de borate de zinc, caractérisé en ce que le rapport de l'agent réticulant pour la résine thermodurcissable à la base de la composition de revêtement est de (0,6-1,1)/1,0, en termes de rapport équivalent du groupe réactif de l'agent réticulant et du groupe fonctionnel capable de réagir avec le groupe réactif de l'agent réticulant, et
   (c) on polarise le matériau en acier recouvert comme cathode.

2. Procédé de protection cathodique selon la revendication 1, dans lequel on applique encore un film protecteur à haute capacité et/ou une couche de finition sur la surface du film déposé.

**3.** Procédé de protection cathodique selon la revendication 1, dans lequel la résine thermodurcissable est au moins une résine choisie parmi (a) des résines époxy et des agents réticulants époxy, (b) des résines de polyols et des isocyanates, (c) des résines époxy à modifications acryliques et des initiateurs de polymérisation, (d) des résines alkydes, (e) des résines uréthane de type réticulables à l'humidité et (f) des résines phénoxy.

**4.** Procédé de protection cathodique selon la revendication 3, dans lequel la résine époxy comprend (a) de l'éther glycidylique de 4,4-(bishydroxyphényl)alcane ou (b) de l'éther glycidylique de 4,4-(bishydroxyphényl)alcane en tant que constituant principal, en combinaison avec (i) une résine époxy novolaque phénolique ou (ii) une résine époxy novolaque de crésol.

**5.** Procédé de protection cathodique selon la revendication 3, dans lequel l'agent réticulant époxy est au moins un composé choisi dans le groupe constitué de diamines aliphatiques, de diamines aromatiques, de diamines hétérocycliques et de produits modifiés des diamines citées ci-dessus, de résines de polyamides ayant réagi avec des acides aliphatiques ou des dimères de ceux-ci, des anhydrides d'acides, des thiols, des phénols, des dérivés de dicyanadiamide présentant une réactivité d'addition et une activité catalytique d'autopolyaddition et des imidazoles.

**6.** Procédé de protection cathodique selon la revendication 3, dans lequel le polyol est au moins une résine choisie dans le groupe constitué des résines de polyesterpolyols, des résines de polyols acryliques, et des résines de polyétherpolyols.

**7.** Procédé de protection cathodique selon la revendication 3, dans lequel l'isocyanate est au moins un composé de diisocyanate.

**8.** Procédé de protection cathodique selon la revendication 3, dans lequel les résines alkydes sont celles obtenues par polymérisation par condensation par déshydratation ou polymérisation d'addition d'alcools polyvalents et d'acides carboxyliques polyvalents ou de leurs anhydrides avec des acides aliphatiques.

**9.** Procédé de protection cathodique selon la revendication 8, dans lequel la résine alkyde est au moins une résine choisie dans le groupe constitué des résines alkydes à modifications phénoliques, des résines alkydes à modifications époxy et des résines alkydes vinyliques.

**10.** Procédé de protection cathodique selon la revendication 1, dans lequel le composé de borate de zinc est au moins un composé choisi dans le groupe constitué de métaborate de zinc, de borate de zinc basique et de borate de zinc.

**11.** Procédé de protection cathodique selon la revendication 10, dans lequel le composé de borate de zinc est le borate de zinc.

**12.** Procédé de protection cathodique selon la revendication 1, dans lequel le rapport massique des constituants (1)/(2) est de 100/10-200.

**13.** Procédé de protection cathodique selon la revendication 1, dans lequel le rapport massique des constituants (1)/(2) est de 100/10-100.

**14.** Procédé de protection cathodique selon la revendication 1, dans lequel la composition comprend en outre du phosphate de calcium.